# EUROPÄISCHE PATENTANMELDUNG

(11) **EP 1 801 797 A1**
(43) Veröffentlichungstag der Anmeldung: **27.06.2007**
(21) Anmeldenummer: 05112497.2
(22) Anmeldetag: 20.12.2005
(51) Int. Cl.: G11B 7/09

(54) **Gerät zum Zugreifen auf optische Aufzeichnungsträger**

(71) Anmelder: DEUTSCHE THOMSON-BRANDT GMBH, 78048 Villingen-Schwenningen (DE)
(72) Erfinder: Bammert, Michael, 78739 Hardt (DE); Zucker, Friedhelm, 78052 Villingen-Schwenningen (DE); Suzuki, Tsuneo, 78087 Mönchweiler (DE)
(74) Vertreter: Thies, Stephan

(57) **Zusammenfassung**

Die vorliegende Erfindung betrifft ein Gerät zum Zugreifen auf optische Aufzeichnungsträger mit einem optischen Abtaster (1) mit einem Linsenhalter (2) mit daran angeordneten Aktuatorspulen (16, 26, 36, 36') und einer Magnetanordnung (11) zum Erzeugen eines die Aktuatorspulen (16, 26, 36, 36') durchlaufenden Magnetfelds.

Aufgabe der Erfindung ist es, ein derartiges Gerät im Hinblick auf die Aktuatorempfindlichkeit zu verbessern.

Erfindungsgemäß besteht dazu die Magnetanordnung (11) aus einem Hauptmagneten (21) und zumindest einem seitlich daran angeordneten Seitenmagneten (22, 23) mit auf der Hauptmagnetisierungsrichtung (31) senkrecht stehender Seitenmagnetisierungsrichtung(32).

## Beschreibung

Die Erfindung betrifft ein Gerät zum Zugreifen auf optische Aufzeichnungsträger, beispielsweise CD, DVD, auf blauem Laserlicht basierende Formate optischer Aufzeichnungsträger wie HD-DVD oder Blu-ray Disk BD, oder zukünftige Formate. Das Zugreifen soll hier sowohl lesendes Zugreifen zum Auslesen von auf dem jeweiligen optischen Aufzeichnungsträger eingespeicherten Informationen, als auch schreibendes Zugreifen zum Einschreiben oder Aufzeichnen von Informationen in den jeweiligen optischen Aufzeichnungsträger, als auch Kombinationen von lesendem und schreibendem Zugreifen umfassen. Ein solches Gerät weist einen oft auch als Pick-up bezeichneten optischen Abtaster auf, der über eine Fokuslinse einen den optischen Aufzeichnungsträger abtastenden Abtaststrahl, im allgemeinen einen Laserstrahl, erzeugt und einen vom optischen Aufzeichnungsträger beeinflussten Detektionsstrahl detektiert. Der optische Abtaster weist einen Linsenhalter mit daran angeordneten Aktuatorspulen und eine Magnetanordnung zum Erzeugen eines Magnetfelds im Bereich der Aktuatorspulen auf. Der Linsenhalter dient zum Halten der Fokuslinse und ist beweglich bezüglich der Aktuatorspulen angeordnet, um ein Verschieben der Fokuslinse senkrecht zur Fläche des optischen Aufzeichnungsträgers, also in Fokusrichtung, oder parallel zur Fläche des optischen Aufzeichnungsträgers, also zum Spurführen in Trackingrichtung, zu ermöglichen. Die Aktuatorspulen werden von einem Fokus- beziehungsweise einem Spurführungs-Regelkreis bestromt zwecks Auslenkung des Linsenhalters in entsprechender Richtung.

In der US 20040022168 A ist ein solches Gerät gezeigt, bei dem eine Magnetanordnung aus Haupt- und Nebenmagneten entgegengesetzter Magnetisierungsrichtung besteht. Als nachteilig an dieser bekannten Anordnung kann angesehen werden, dass die in Richtung der Aktuatorspulen weisenden entgegengesetzt gerichteten Magnetfelder zu einer Abschwächung des resultierenden Gesamtmagnetfelds und zu einer Verringerung der Empfindlichkeit insbesondere der Fokusregelung führen.

Aufgabe der Erfindung ist es, ein derartiges Gerät im Hinblick auf die Aktuatorempfindlichkeit zu verbessern.

Erfindungsgemäß ist dazu vorgesehen, dass die Magnetanordnung aus einem Hauptmagneten mit einer Hauptmagnetisierungsrichtung und zumindest einem seitlich daran angeordneten Seitenmagneten mit einer senkrecht auf der Hauptmagnetisierungsrichtung stehenden Seitenmagnetisierungsrichtung besteht. Dies hat den Vorteil, dass auf vor den Seitenmagneten angeordnete effektive Zweige einer Spurführungsspule unterschiedlich starke oder sogar entgegengesetzt gerichtete Magnetfelder wirken, was die Empfindlichkeit der Spurführung erhöht, während gleichzeitig das auf eine vor der gesamten Magnetanordnung angeordnete Fokusspule wirkende Magnetfeld im Wesentlichen durch die Seitenmagnete nicht geschwächt wird, was zu einer unvermindert guten Empfindlichkeit der Fokusregelung führt. Durch Variation der Größe, der Feldstärke, und der Position von Haupt- und Seitenmagneten lässt sich die Empfindlichkeit der Anordnung bezüglich Fokus- Tracking- und Tilteinstellung in weiten Grenzen einstellen.

Vorteilhafterweise sind an dem Hauptmagneten Seitenmagnete der oben beschriebenen Art sowohl in Trackingrichtung als auch in Fokusrichtung angeordnet. Dies hat den Vorteil, dass ein verstärktes Magnetfeld bezüglich der Fokus- und Tiltspulen vorliegt.

Vorteilhafterweise sind die Seitenmagnete so magnetisiert, dass derjenige ihrer Pole, der in Richtung des Hauptmagneten liegt, gleichnamig ist mit demjenigen Pol des Hauptmagneten, der in Richtung der Aktuatorspulen liegt. Dies hat den Vorteil, dass in dem Bereich wo die beiden Magnete aneinandergrenzen das die Aktuatorspulen durchdringende Magnetfeld verstärkt wird.

Eine weitere Erhöhung der Fokusempfindlichkeit ist erfindungsgemäß dadurch möglich, dass in Trackingrichtung die Breite der Fokusspule geringer als die Breite der Magnetanordnung gewählt wird, sodass die aktiven Zweige der Fokusspule hauptsächlich im Bereich des durch die Seitenmagnete verstärkten Magnetfelds des Hauptmagneten liegen.

Weitere Vorteile der Erfindung und Varianten sind in der nachfolgenden Beschreibung von Ausführungsbeispielen angegeben. Dabei zeigen
- Fig. 1: Teile eines erfindungsgemäßen Geräts in räumlicher Darstellung;
- Fig. 2: Teile eines erfindungsgemäßen Geräts mit Blick auf den Linsenhalter;
- Fig. 3: eine Variante einer erfindungsgemäßen Magnetanordnung.

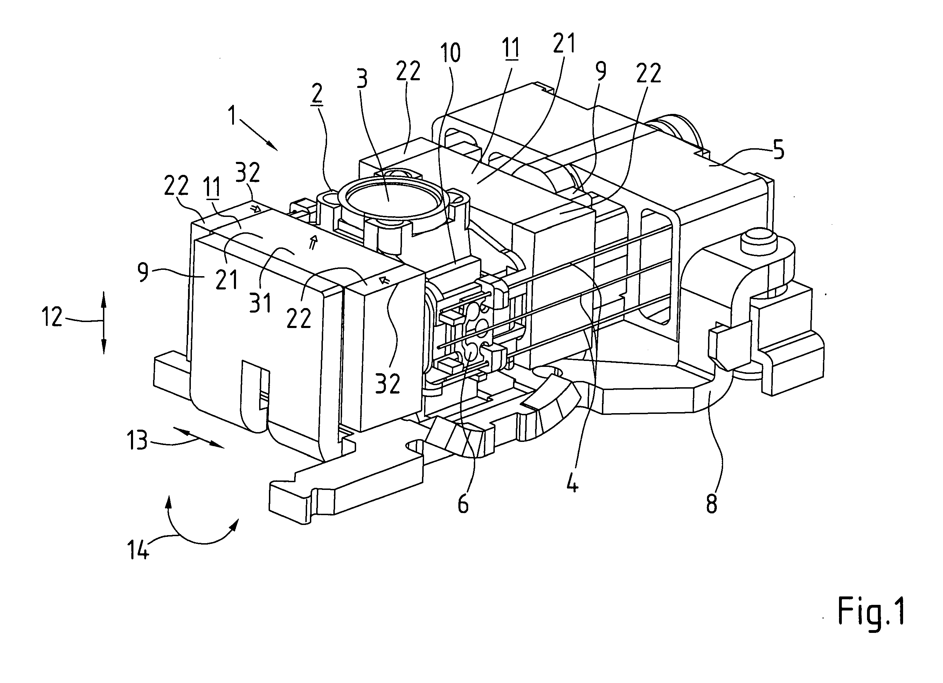

Fig. 1 zeigt einen Teil eines optischen Abtasters 1 eines erfindungsgemäßen Gerätes mit einem Linsenhalter 2, einer darin angeordneten Fokuslinse 3 sowie mit Haltedrähten 4, die den Linsenhalter 2 mit einer Halterung 5 mechanisch in einer federnden Parallelogramm-Aufhängung und elektrisch leitend verbinden. Zur elektrischen Verbindung dienen Kontaktierungspunkte 6, die gegenüber der in Fig. 1 aus Gründen der Übersichtlichkeit gewählten Darstellung noch mit den Haltedrähten 4 verbunden werden müssen.

Die Halterung 5 ist mit einem Grundelement 8 aus ferromagnetischem Material verbunden, welches Laschen 9, 10 zum Bilden eines magnetischen Rückschlusses mit der Magnetanordnung 11 bildet. Das im Zwischenraum zwischen Magnetanordnung 11 und Lasche 10 vorliegende Magnetfeld wirkt auf die hier nicht beziehungsweise nur teilweise sichtbaren Spulen, die als Aktuatoren für Einstellung des Fokus in Fokusrichtung 12, der auch Tracking genannten Spurführung in Spurführungs- oder Trackingrichtung 13, oder des Tilt in Tiltrichtung 14 dienen.

Die Magnetanordnung 11 besteht aus einem Hauptmagneten 21 und zwei in Trackingrichtung 13 seitlich daran angeordneten Seitenmagneten 22. Die Hauptmagnetisierungsrichtung 31 des Hauptmagneten 21 ist senkrecht zu der nur beim vorderen Seitenmagneten 22 angedeuteten Seitenmagnetisierungsrichtung 32 der Seitenmagnete 22.

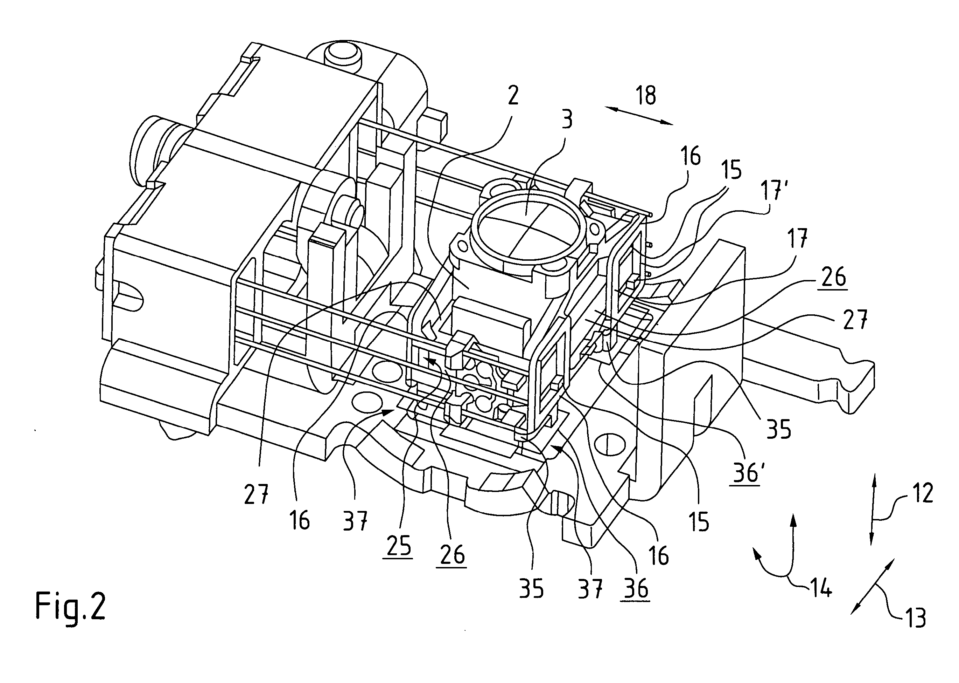

Fig. 2 zeigt einen Teil eines erfindungsgemäßen Geräts, das hier mit Blick auf den Linsenhalter 2 aber ohne die Magnete dargestellt ist. Um erste Halterungen 15 sind Spurführungsspulen 16 mit senkrecht verlaufenden effektiven Zweigen 17, 17' gewickelt. Eine Bestromung der Spurführungsspulen 16 führt zu einer Spurführungseinstellung durch Auslenkung des Linsenhalters 2 in Trackingrichtung 13. Bei der erfindungsgemäßen Ausführung der Magnetanordnung 11 als Hauptmagnet 21 und Seitenmagnet 22 ist die Auslenkung und damit die Empfindlichkeit der Spurführungseinstellung dadurch verstärkt, dass jeder der entgegengesetzt bestromten effektiven Zweige 17, 17' der Spurführungsspulen 16 jeweils in der Nähe eines der beiden ungleichnamigen Pol-Enden der Seitenmagnete 22 liegen. Durch die zusätzlichen Seitenmagnete 22 wird eine zusätzliche Lorentzkraft auf die äußeren effektiven Zweige 17' der Trackingspulen 16 erzeugt, was die Empfindlichkeit der Spurführung steigert. In einem Gerät ohne die Seitenmagnete 22 dürften zur Erzielung einer maximalen Trackingempfindlichkeit nur die jeweils inneren effektiven Zweige 17 der Trackingspulen 16 im Magnetfeld des Hauptmagneten 21 liegen.

In einer komplett um den Linsenhalter 2 herumlaufenden Ausnehmung 25 ist eine Fokussierungsspule 26 aufgewickelt. Die in Trackingrichtung 13 liegenden Zweige der Fokussierungsspule 26 stellen dabei ihre effektive Zweige 27 dar, da dort die Spulenleiter komplett im Magnetfeld der hier nicht gezeigten Magnetanordnung 11 und senkrecht zur Richtung des Magnetfelds angeordnet sind. Eine Bestromung der Fokussierungsspule 26 führt zu einer Fokuseinstellung durch Aufwärts- oder Abwärtsbewegung des Linsenhalters 2 in Fokusrichtung 12. Die Empfindlichkeit der Fokuseinstellung ist dadurch verstärkt, dass die effektiven Zweige 27 der Fokussierungsspule 26 über ihre gesamte Länge nicht nur dem unverminderten Magnetfeld des Hauptmagneten 21 ausgesetzt sind, sondern dass dieses Magnetfeld in seinen Randbereichen in der Nähe der Seitenmagnete 22 sogar noch durch das rechtwinklig zum Hauptmagnetfeld ausgerichtete Seitenmagnetfeld verstärkt wird.

Auf zweite Halterungen 35 sind in der Fig. nur schematisch angedeutete Verkippungsspulen 36, 36' aufgewickelt. Ihr effektiver Zweig 37 liegt parallel zu dem effektiven Zweig 27 der Fokussierungsspule 26. Die beiden Verkippungsspulen 36 sind so miteinander elektrisch verbunden, dass sie im Zusammenwirken mit dem Magnetfeld der hier nicht gezeigten Magnetanordnungen eine Tilteinstellung durch Verkippung des Linsenhalters 2 in Tiltrichtung 14 entsprechend einer Rotation um die Achse der Spurrichtung 18 hervorrufen. Dies wird erreicht, indem die Stromflussrichtungen der Verkippungsspulen 36, 36' je nach Magnetpolarität so gewählt werden, dass bei gemeinsamer Bestromung der in Serie hintereinander geschalteten Verkippungsspulen 36, 36' die jeweils in Fokusrichtung 12 resultierende Auslenkkraft der beiden Verkippungsspulen 36, 36' entgegengesetzt gerichtet ist.

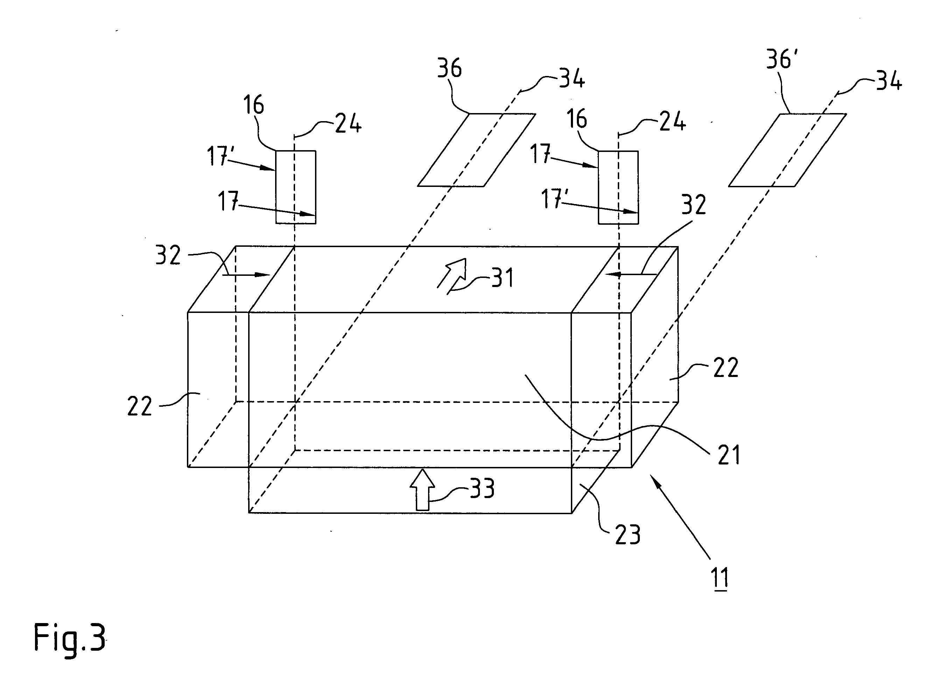

Fig. 3 zeigt in schematischer Darstellung eine Variante einer erfindungsgemäßen Magnetanordnung mit einem Hauptmagneten 21, links und rechts davon angeordneten ersten Seitenmagneten 22 sowie einem unter dem Hauptmagneten 21 angeordneten zweiten Seitenmagneten 23 mit einer ebenfalls auf der Hauptmagnetisierungsrichtung 31 senkrecht stehenden Seitenmagnetisierungsrichtung 33. Oberhalb der Magnetanordnung 11 sind Spurführungsspulen 16 in einer nach senkrecht oben versetzten Darstellung angedeutet, die tatsächlich hinter der Magnetanordnung 11 verdeckt, jeweils in der Nähe der dortigen ersten Grenzlinie 24 zwischen Hauptmagnet 21 und Seitenmagnet 22, liegen. In einer räumlich nach hinten, also in der Fig. nach schräg rechts oben versetzten Darstellung sind auch Verkippungsspulen 36, 36' dargestellt, die sich tatsächlich oberhalb einer zweiten Grenzlinie 34 zwischen Hauptmagnet 21 und Seitenmagnet 23 befinden. Der zweite Seitenmagnet 23 sorgt dafür, dass das Magnetfeld des Hauptmagneten 21 im Bereich der Verkippungsspulen 36, 36' stärker ist, und somit eine erhöhte Empfindlichkeit erzielt wird.

## Patentansprüche

1. Gerät zum Zugreifen auf optische Aufzeichnungsträger mit einem optischen Abtaster (1) zum Erzeugen eines den optischen Aufzeichnungsträger abtastenden Abtaststrahls und zum Detektieren eines vom optischen Aufzeichnungsträger beeinflussten Detektionsstrahls, wobei der optische Abtaster (1) einen Linsenhalter (2) mit daran angeordneten Aktuatorspulen (16, 26, 36, 36') und eine Magnetanordnung (11) zum Erzeugen eines die Aktuatorspulen (16, 26, 36, 36') durchlaufenden Magnetfelds aufweist, **dadurch gekennzeichnet, dass** die Magnetanordnung (11) aus einem Hauptmagneten (21) mit einer Hauptmagnetisierungsrichtung (31) und zumindest einem seitlich daran angeordneten Seitenmagneten (22, 23) mit einer auf der Hauptmagnetisierungsrichtung (31) senkrecht stehenden Seitenmagnetisierungsrichtung (32) besteht.

2. Gerät nach Anspruch 1, bei dem Seitenmagnete (22, 23) sowohl in Trackingrichtung (13) als auch in Fokusrichtung (12) neben dem Hauptmagneten (21) angeordnet sind.

3. Gerät nach Anspruch 1 oder 2, bei dem derjenige der Pole der Seitenmagneten (22,23), der jeweils in Richtung des Hauptmagneten liegt, gleichnamig ist mit demjenigen Pol des Hauptmagneten (21), der in Richtung der Aktuatorspulen (16, 26, 36, 36') liegt.

4. Gerät nach einem der vorherigen Ansprüche, bei dem in Trackingrichtung (13) die Breite einer Fokussierungsspule (26) geringer als die Breite der Magnetanordnung (11) gewählt wird, sodass die effektiven Zweige (27) der Fokussierungsspule (26) im Bereich des durch die Seitenmagnete (22,23) verstärkten Magnetfelds des Hauptmagneten (21) liegen.
